# EUROPÄISCHE PATENTSCHRIFT

(11) **EP 3 519 146 B1**
(45) Veröffentlichungstag und Bekanntmachung des Hinweises auf die Patenterteilung: **22.04.2020**
(21) Anmeldenummer: 17797234.6
(22) Anmeldetag: 20.10.2017
(51) Int. Cl.: B23D 59/00

(54) **ABSCHIRMVORRICHTUNG FÜR EINE SÄGE, INSBESONDERE TISCHKREISSÄGE UND MIT EINER SOLCHEN ABSCHIRMVORRICHTUNG AUSGESTATTETE SÄGE, INSBESONDERE TISCHKREISSÄGE**
SHIELDING MECHANISM FOR A SAW, ESPECIALLY TABLE CIRCULAR AND A SAW, ESPECIALLY TABLE CIRCULAR SAW EQUIPPED WITH SUCH A SHIELDING MECHANISM
MÉCANISME DE PROTECTION POUR UNE SCIE, EN PARTICULIER SCIE CIRCULAIRE À TABLE ET UNE SCIE, EN PARTICULIER SCIE CIRCULAIRE À TABLE EQUIPEE DE TELS MÉCANISME DE PROTECTION

(30) Priorität: 24.02.2017 EP 17020067
(43) Veröffentlichungstag der Anmeldung: 07.08.2019
(73) Patentinhaber: Scheppach Fabrikation von Holzbearbeitungsmaschinen GmbH, 89335 Ichenhausen (DE)
(72) Erfinder: BINDHAMMER, Markus, 86316 Friedberg (DE)
(74) Vertreter: Munk, Ludwig Hubert
(86) Internationale Anmeldenummer: PCT/EP2017/025313
(87) Internationale Veröffentlichungsnummer: WO 2018/153425

(56) Entgegenhaltungen:
- CN-A- 104 275 624
- CN-U- 205 704 553
- DE-U1- 20 316 470
- US-A1- 2005 098 012
- US-A1- 2012 085 214

## Beschreibung

Die Erfindung betrifft eine Abschirmvorrichtung zur Abschirmung eines Sägeblatts einer Säge, insbesondere einer Tischkreissäge, gemäß den Merkmalen des Oberbegriffs des Anspruchs 1, sowie eine mit einer solchen Abschirmvorrichtung ausgestattete Säge, insbesondere Tischkreissäge.

Derartige Abschirmvorrichtungen dienen zur Abschirmung eines Sägeblatts oder -bands, beispielsweise an Tischkreissägen, Zug- Kapp- und Gehrungssägen, Bandsägen etc.. An Tischkreissägen ist es beispielsweise üblich, oberhalb des aus dem Tisch ragenden Abschnitts des Sägeblatts einen beispielsweise haubenförmigen Sägeblattschutz als Abschirmvorrichtung anzubringen.

Beim Sägen erhitzen sich Sägeblätter durch die dabei auftretende Reibung. Überhitzungen erkennt man nur am ruhenden Sägeblatt durch kreisrunde Brandflecken oder Beulen. Bei örtlicher Überhitzung dehnen sich die Blattzonen unterschiedlich aus, das Sägeblatt verliert seine Spannung, es wird wellig und flattert beim Sägen. Beim Arbeiten mit solchen überhitzten Sägeblättern können lebensgefährliche Risse entstehen.

Zur Vermeidung von Unfällen aufgrund von Überhitzung des Sägeblatts ist daher bereits eine Werkzeugmaschinenüberwachungsvorrichtung vorgeschlagen worden, bei der mittels zu beiden Seiten des Sägeblatts angebrachten Infrarotsensoren die Oberflächentemperatur des Sägeblatts erfasst und als Eingangsparameter für eine Werkzeugsteuerung genommen wird, die z.B. die Drehzahl des Sägeblatts entsprechend steuert, siehe beispielsweise die deutsche Gebrauchsmusterschrift DE 20 2013 007 344 U1.

Nach demselben Prinzip wird gemäß der europäischen Patentanmeldung EP 2 596 891 A1 das Sägeblatt mit Kühlflüssigkeit im Ansprechen auf die Ausgabe eines seitlich des Sägeblatts angeordneten Infrarot-Temperatursensors durchgeführt. Ähnliches beschreibt bereits die deutsche Patentanmeldung DE 198 30 605 A1.

Als weitere Sicherheitsmaßnahme weisen gattungsgemäße Sägen, insbesondere Kreissägen in aller Regel einen Sägeblattschutz auf, also eine im Betrieb der Kreissäge über das Sägeblatt gestülpte, haubenförmige Abdeckung, die das Sägeblatt abschirmt und dadurch einen Benutzer der Säge vor Verletzungen durch unbeabsichtigtes Hineingreifen das rotierende Sägeblatt durch vom Werkstück bei der Bearbeitung absplitternden Teilen schützt.

In der deutschen Patentanmeldung DE 10 2008 054 701 A1 ist bereits vorgeschlagen worden, Sensorelemente unter anderem an dem Sägeblattschutz anzubringen, um mit diesen Sensorelementen eine Materialkenngröße zu erfassen, die widerspiegelt, ob sich in einem Werkstück ein Fremdkörper befindet oder nicht, so dass etwa bei einem in einem Brett enthaltenen Nagel die Motorsteuerung abgeschaltet werden kann. Unter anderem ist dazu die Erfassung der aktuellen Werkzeugtemperatur und anhand der Änderung derselben die Erfassung, ob im Werkstück ein Fremdkörper enthalten ist, vorgesehen.

Weiterhin zeigt die deutsche Patentanmeldung DE 10 2009 045 322 A1 die Anordnung von Strahlungssendern und Empfängern an der Schutzabdeckung des Sägeblatts, die auf einen Arbeitsbereich vor dem Sägeblatt gerichtet sind, dem Ziel zu erfassen, ob sich dort eine menschliche Gliedmaße befindet, oder ob der reguläre Betrieb der Säge durchgeführt werden kann, weil sich dort nur ein Werkstück befindet, wie vorgesehen.

Die CN 104 27 56 24 offenbart eine Kreissäge, bei der am Sägeblattschutz ein Temperatursensor und eine Kühlwasserleitung angebracht sind, wobei die Kühlmittelzufuhr im Ansprechen auf die erfasste Temperatur ein- oder ausgeschaltet wird. Eine Motorkettensäge mit einer Anzeigeeinrichtung wird auch in der DE20316470U1 offenbart.

Hiervon ausgehend ist es Aufgabe der vorliegenden Erfindung, die Sicherheit bei bestehenden und neuen elektrisch betätigten Sägen mit einfachen und kostengünstigen Mitteln zu steigern und Anreize zu setzen, dass diese Maßnahmen auch im Bereich von kostengünstigen Heimwerker- und Hobbywerkzeugen umgesetzt werden.
Diese Aufgabe wird hinsichtlich einer Abschirmvorrichtung mit den Merkmalen des Anspruchs 1 gelöst, hinsichtlich einer damit ausgestatteten Säge mit den Merkmalen des Anspruchs 13.
Erfindungsgemäß weist die Abschirmvorrichtung eine Temperaturüberwachungseinheit auf, die einen berührungslos arbeitenden Temperatursensor hat, welcher bei an der Sägemaschine angebrachter und in ihrer Arbeitsstellung befindlicher Abschirmvorrichtung auf die Verzahnung des Sägeblatts oder - beispielsweise im Falle einer Bandsäge - Sägebands gerichtet ist, sowie eine Anzeigevorrichtung, welche die vom Temperatursensor erfasste Oberflächentemperatur an der Oberfläche der Verzahnung des Sägeblatts anzeigt. Weiterhin erfindungsgemäß ist die Temperaturüberwachungseinheit insgesamt als autark arbeitende Einheit ausgebildet, muss also nicht an eine externe Stromversorgung oder Steuerung angeschlossen werden, und ist werkzeuglos vom Bediener abnehmbar an der Abschirmvorrichtung angebracht, beispielsweise dort aufgeschoben oder aufgeclipst.

Erfindungsgemäß wird weiterhin eine Sägemaschine mit einem Sägeblatt oder -band vorgeschlagen, an der eine das Sägeblatt bzw. -band abdeckende Abschirmvorrichtung dieser Art angebracht ist.
Mit der erfindungsgemäßen Abschirmvorrichtung bzw. mit der mit der erfindungsgemäßen Abschirmvorrichtung ausgerüsteten Sägemaschine wird zwar keine so weitgehend automatisierte Sicherheitslösung wie bei den aus dem Stand der Technik bekannten Lösungen erzielt. Dafür wird gerade an kleinen und kostengünstigen Sägemaschinen, die im Hobby- und Heimwerkerbereich zum Einsatz kommen, oder auch bei Baukreissägen, die unter robusten Arbeitsbedingungen eingesetzt werden müssen und daher nicht mit anfälligen Steuerelektroniken ausgerüstet sein können, dem Benutzer eine zusätzliche Überwachungsmöglichkeit bereitgestellt, die es ihm erlaubt, einen plötzlichen Temperaturanstieg und damit ein bevorstehendes Versagen des Sägeblatts oder -bands zu erfassen und dem durch geeignete Maßnahmen entgegen zu wirken, indem er beispielsweise die Säge abschaltet oder das Werkstück außer Eingriff mit dem Sägeblatt bringt.

Durch die autark arbeitende Temperaturüberwachungseinheit entfällt dabei nicht nur die Notwendigkeit für entsprechende Stromversorgungs- oder Steuerleitungen bzw. Funkstrecken, sondern es gelingt auch, Sägeblattschutzhauben oder dergleichen als Austauschteile für bereits bestehende Sägemaschinen anzubieten, die im Gegensatz zu den konventionellen Sägeblatt- bzw. -bandabschirmvorrichtungen mit einer solchen Temperaturüberwachungseinheit ausgerüstet sind.

Noch weiter in diese Richtung geht es, dass die Temperaturüberwachungseinheit abnehmbar an der Abschirmvorrichtung angebracht ist. Denn dadurch wird es z.B. denkbar, einen ganzen Satz von Sägemaschinen einer bestimmten Baureihe mit Abschirmvorrichtungen auszustatten, die mit entsprechenden Aufnahmen für eine Temperaturüberwachungseinheit versehen sind, so dass eine einzelne Temperaturüberwachungseinheit an einer Mehrzahl von Abschirmvorrichtungen eingesetzt werden könnte.

Dadurch, dass die Temperaturüberwachungseinheit werkzeuglos vom Bediener abnehmbar an der Abschirmvorrichtung angebracht ist, erhält der Benutzer einen Zusatznutzen. Denn die Temperaturüberwachungseinheit stellt ein vollständiges, berührungslos arbeitendes Oberflächenthermometer bereit, das der Benutzer dann in abgenommenem Zustand auch unabhängig von der Sägemaschine einsetzen kann.

Für diesen Anwendungsfall ist es besonders vorteilhaft, wenn die Temperaturüberwachungseinheit ferner eine in Erfassungsrichtung des Temperatursensors einen im Querschnitt punktförmigen Lichtstrahl abgebende Zielhilfevorrichtung aufweist. Die Zielhilfevorrichtung dient dann zum Anpeilen eines Messpunkts, dessen Oberflächentemperatur mit der abgenommenen Temperaturüberwachungseinheit gemessen werden soll. Die Zielhilfevorrichtung kann beispielsweise als Laserdiode mit einer konvexen Linse ausgebildet sein, die den Laserstrahl zusätzlich bündelt.

Vorteilhafte Weiterbildungen sind der Gegenstand der Unteransprüche.

So eignet sich die vorgeschlagene Abschirmvorrichtung insbesondere für Tischkreissägen und ist daher vorzugsweise als oberhalb eines Tisches einer Tischkreissäge anbringbarer Sägeblattschutz ausgebildet.

Weiterhin bevorzugt ist die Temperaturüberwachungseinheit der Abschirmvorrichtung mit Batterie bzw. Akkumulator betrieben, so dass keine Versorgungsleitungen zur Stromversorgung des Sägeblatt- bzw. Bandantriebs oder Steuerleitungen zu deren Steuerung nötig sind. Dazu weist die Temperaturüberwachungseinheit weiterhin bevorzugt ein Batterieaufnahmefach auf, das zur Aufnahme von zumindest einer Batterie bzw. zumindest einer Akkumulatorzelle vorgesehen ist, und zum Austausch der Batterie bzw. des Akkumulators vorzugsweise über einen abnehmbaren Deckel verfügt.

Weiterhin vorteilhaft ist die Temperaturüberwachungseinheit mit einem AN-/-AUS-Schalter ausgestattet, an dem sie von einem Bediener an- oder ausgeschaltet werden kann, unabhängig vom Betrieb der Säge an sich.

Weiterhin vorteilhaft weist die Temperaturüberwachungseinheit einen Microcontroller auf, in dem Steuerroutinen zur Steuerung der Temperaturüberwachungseinheit implementiert sind, so dass bei angeschalteter Temperaturüberwachungseinheit im Ansprechen auf die Ausgabe des Temperatursensors die erfasste Oberflächentemperatur auf der Anzeigenvorrichtung angezeigt wird. Dabei kann der Microcontroller auch optionale Zusatzelemente der Temperaturüberwachungseinheit steuern, auf die noch eingegangen wird.

Die Anzeigevorrichtung kann dabei als OLED-Display ausgebildet sein, wobei jedoch auch andere Anzeigevorrichtungen, z.B. ein LED-Display oder ein LCD-Display vorgesehen sein könnte. Als Temperatursensor eignet sich dagegen ein gängiger, mittlerweile kostengünstig erhältlicher Infrarot-Temperatursensor.

Einen Zusatznutzen erhält die Temperaturüberwachungseinheit, wenn sie eine Schnittlinienanzeigevorrichtung aufweist, die beispielsweise in Form einer Laserdiode mit einer refraktiven Optik ausgebildet sein kann, welche eine in Schnittrichtung weisende Linie auf das Werkstück projeziert.

Die Abschirmvorrichtung kann einen an der Sägemaschine ortsfest anbringbaren Halterabschnitt und einen daran beweglich aufgenommenen Schirmträgerabschnitt aufweisen, so dass die Abschirmvorrichtung zwischen einer offenen Stellung, in der das Sägeblatt offen zugänglich ist, bzw. offen liegt, und der das Sägeblatt verdeckenden Arbeitsstellung beweglich an der Sägemaschine anbringbar ist, vorzugsweise schwenkbeweglich anbringbar ist.

Als die im Einsatz besonders hoher Belastung ausgesetzte Oberfläche des Sägeblatts bzw. -bands muss dabei die quer zur Schnittrichtung verlaufende Oberfläche der Verzahnung des Sägeblatts bzw. -bands angesehen werden, bei einer Kreissäge, also die umfangsseitige Oberfläche der Verzahnung des Sägeblatts, die in Radialrichtung weist. Vorteilhaft ist die Temperaturüberwachungseinheit daher so an der Abschirmvorrichtung angebracht, dass der Temperatursensor bei an der Sägemaschine angebrachter und in der Arbeitsstellung befindlicher Abschirmvorrichtung auf die quer zur Schnittrichtung, insbesondere umfangsseitige Oberfläche der Verzahnung des Sägeblatts bzw. -bands gerichtet ist.

Die Abschirmvorrichtung der vorgeschlagenen Art eignet sich besonders gut in ihrer Ausbildung als Sägeblattschutz für eine Tischkreissäge. Dementsprechend ist die Sägemaschine vorteilhaft als Tischkreissäge ausgebildet und weist dementsprechend einen an einer schlitzförmigen Ausnehmung von einem Sägeblatt durchdrungenen Maschinentisch auf, der oberhalb des Sägeblatts eine als Sägeblattschutz der vorstehend erläuterten Art ausgebildete Abschirmvorrichtung trägt.

Im Weiteren wird eine bevorzugte Ausführungsform der Erfindung anhand der beiliegenden Zeichnungen näher erläutert. Es zeigen:
- Figur 1: eine perspektivische Ansicht einer als Sägeblattschutz für eine Kreissäge ausgebildeten Ausführungsform der erfindungsgemäßen Abschirmvorrichtung in Arbeitsstellung oberhalb eines Kreissägeblatts;
- Figur 2: eine der Fig. 1 entsprechende Ansicht bei abgenommener Temperaturüberwachungseinheit der Abschirmvorrichtung;
- Figur 3: Einzelheit III aus Fig. 1 unter Auslassung der Seitenwände der Abschirmvorrichtung;
- Figur 4: eine Einzelheit gemäß einer Variante der in den Figuren 1 bis 3 gezeigten Ausführungsform der Erfindung; und
- Figur 5: einen elektrischen Schaltplan der Temperaturüberwachungseinheit der Abschirmvorrichtung in der Variante gemäß Fig. 4..

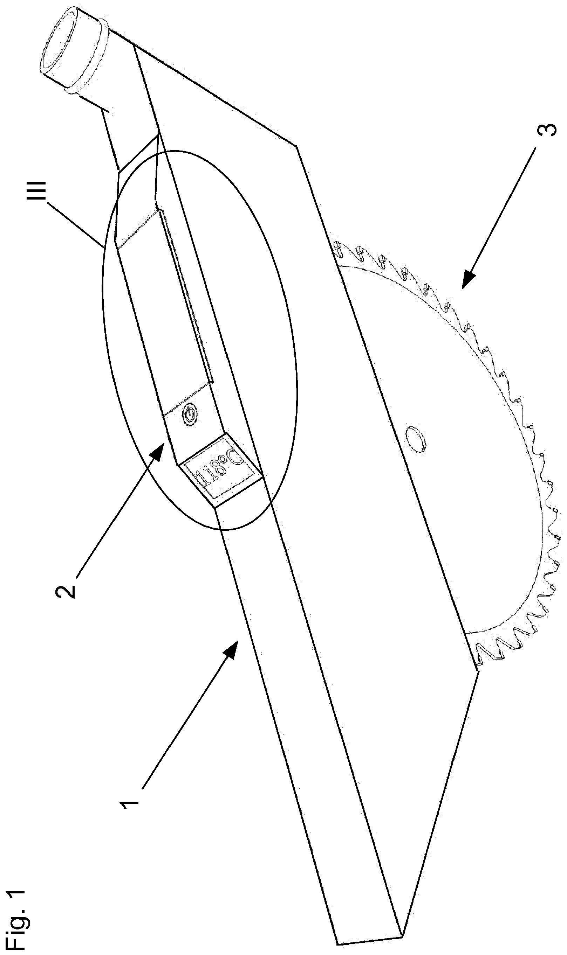

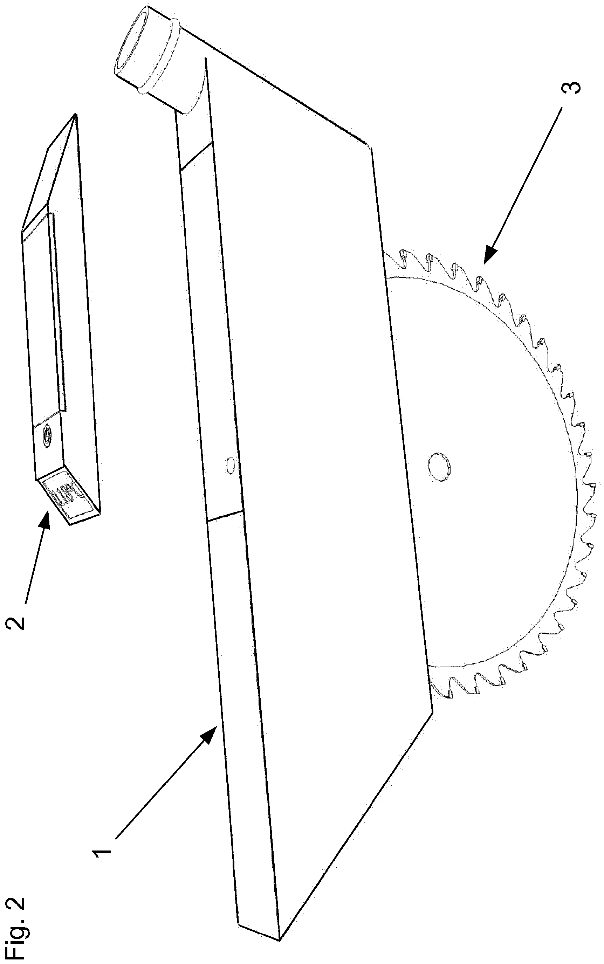

Zunächst wird Bezug genommen auf die Fig. 1, welche eine als Sägeblattschutz bzw. Sägeblatt-Abdeckhaube ausgebildete Abschirmvorrichtung 1 in ihrer Arbeitsstellung oberhalb eines Sägeblatts 3 einer Kreissägemaschine zeigt, deren weitere Einzelheiten hier aus Übersichtlichkeitsgründen weggelassen worden sind. Der Sägeblattschutz 1 ist dabei in etwa haubenförmig ausgebildet und trägt auf seiner nach oben gerichteten Stirnseite eine Temperaturüberwachungseinheit 2, die, im Prinzip, aber ohne auf die näheren, fachnotorisch bekannten Befestigungsmittel einzugehen, die Fig. 2 zeigt.

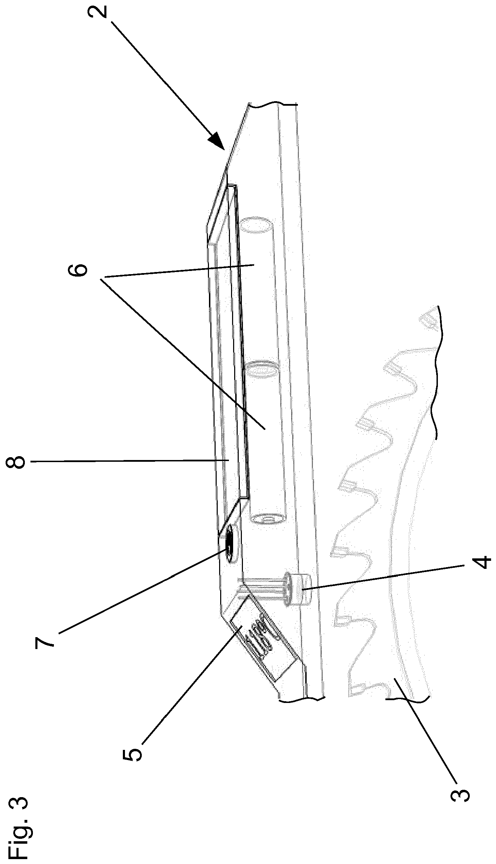

In der Figur 3 sind die Einzelheiten der Temperaturüberwachungseinheit 2 der Abschirmvorrichtung 1 bezeichnet. Man erkennt einen mit Bezugszeichen 4 bezeichneten Infrarot-Temperatursensor, der mit einem Öffnungswinkel von 10° auf die umfangsseitige Oberfläche der Verzahnung des Sägeblatts 3 gerichtet ist und die dort herrschende Temperatur erfasst. Die dabei erzielten Messergebnisse werden in einer nicht dargestellten Microcontroller-Einheit verarbeitet und auf einer als OLED-Display ausgeführten Anzeigevorrichtung 5 angezeigt, sofern die Temperaturüberwachungseinheit 2 an einem AN-/-AUS-Schaltknopf 7 angeschaltet worden ist. Die zum Betrieb der Temperaturüberwachungseinheit 2 nötige Energie bezieht diese über zwei in ein Batterieaufnahmefach eingelegte AAA-Batteriezellen 6, wobei das Batterieaufnahmefach über einen abnehmbaren Deckel 8 zugänglich ist. Die Temperaturüberwachungseinheit 2 arbeitet somit vollständig autark und kann auch, wie Fig. 2 zeigt, von der Abschirmvorrichtung 1 abgenommen und als eigenständiges Oberflächenthermometer eingesetzt werden. Neben der Temperatur eines entfernten Objektes kann der Sensor auch die Umgebungstemperatur messen.

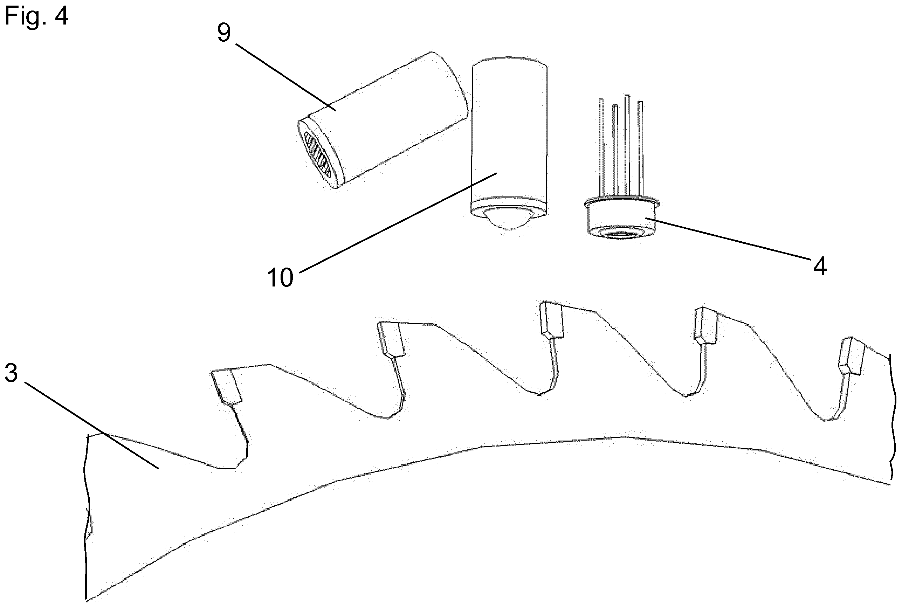

Figur 4 zeigt eine Weiterbildung der in den Figuren 1 bis 3 gezeigten Temperaturüberwachungseinheit 2 mit zwei zusätzlichen Laserdioden 9, 10 über dem Sägeblatt 3 in Position neben dem IR-Temperatursensor 4, jedoch unter Weglassung aller anderen Bauelemente. Die Laserdiode 9 weist dabei in Schnittrichtung und ist mit einer refraktiven Optik versehen, so dass sie eine in Schnittrichtung weisende Linie auf den vor dem Sägeblatt 3 liegenden Werkstückabschnitt projeziert und somit als Schnittlinienanzeige fungiert. Die Laserdiode 10 dient dagegen als Peilhilfe, wenn der Benutzer die abgenommene Temperaturüberwachungseinheit 2 als eigenständiges IR-Thermometer verwenden will und zeigt in dieselbe Richtung wie der IR-Temperatursensor 4. Um den Laserstrahl der Laserdiode 10 zu bündeln, kann diese mit einer konvexen Linse versehen sein.

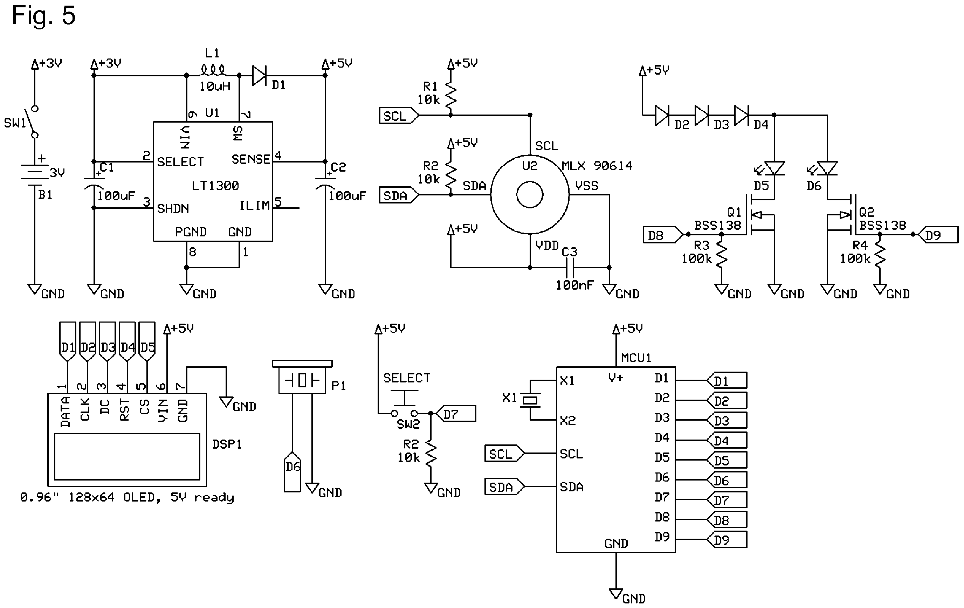

Figur 5 zeigt die Elektronik der gemäß Fig. 4 weitergebildete Temperaturüberwachungseinheit 2, wobei teilweise abweichende Bezugszeichen für deren Einzelelemente im Schaltplankontext verwendet worden sind.

Der Sensor überträgt das Messergebnis per I2C-Bus an den Microcontroller MCU1. Die gesamte elektronische Schaltung wird durch zwei AAA-Batterien B1 gespeist, um die Abmessungen klein zu halten. Über den Ein-/Ausschalter SW1 wird die Schaltung in Betrieb genommen. Der Step-Up DC-DC Wandler U1 wandelt die Spannung von 3 V, die die beiden in Reihe geschalteten AAA-Batterien B1 zur Verfügung stellen, in geregelte 5 V um, die für den Temperatursensor U1 und den Microcontroller MCU1 benötigt werden. Der Wandler U1 benötigt hierzu nur vier externe Komponenten: die beiden Elektrolytkondensatoren C1 und C2 sowie die Drossel L1 und die Diode D1. Der I2C-Bus verfügt über zwei Pullup-Widerstände R1 und R2. Der Keramikkondensator C3 dient zur Entkoppelung.

D5 und D6 sind Laserdioden. Die Schwellspannung der in Reihe geschalteten Dioden D2, D3 und D4 sorgt für einen Spannungsabfall von ca. 2,1 V, so dass eine Versorgungsspannung von ca. 2,9 V für die beiden Laserdioden D5 und D6 gegeben ist. Die Logic-Level-N-Kanal-MOSFETs Q1 und Q2 ziehen die Kathoden der Laserdioden D5 und D6 gegen Masse, wenn an deren Gates 5-V-Pegel anliegt. Die Laserdiode D5 besitzt eine konvexe Linse, so dass ein punktförmiger Laserstrahl austritt. Die Laserdiode D6 besitzt eine refraktive Optik, so dass ein linienförmiger Laserstrahl austritt. Die Laserdiode D5 dient als Zielhilfe, um auf ein Objekt zu zielen, dessen Temperatur bestimmt werden soll, wenn die Temperaturüberwachungseinheit vom Sägeblattschutz 1 abgenommen wird und als IR-Thermometer dient. Die Laserdiode D6 dient als Schnittlinienanzeige, wenn die Temperaturüberwachungseinheit auf dem Sägeblattschutz 1 sitzt und die Temperatur des Sägeblattes 3 bestimmt werden soll.

Um eine gute Lesbarkeit auch über eine größere Entfernung und bei schlechten Lichtverhältnissen zu gewährleisten, kommt das OLED-Display DSP1 zum Einsatz. Daten zwischen dem OLED-Display DSP1 und dem Microcontroller MCU1 werden über SPI oder ebenfalls über den I2C-Bus übertragen. Über den Taster SW2 können verschiedene Funktionen gewählt werden. Diese umfassen zumindest das Umschalten von Linienlaser-Betrieb auf Punktlaser-Betrieb und umgekehrt, die Anzeige der Umgebungs- und Sägeblatttemperatur in °C und °F mit akustischer Warnung durch den Piezoschallwandler P1 und optischer Warnung durch entsprechende Warntexte oder Warnsymbole auf dem OLED DSP1 bei Überhitzung des Sägeblattes, einen Timer, der die Zeit auf dem OLED DSP1 anzeigt, die seit der Inbetriebnahme der Schaltung verstrichen ist, des Weiteren die Anzeige der durchschnittlichen Umgebungs- und Sägeblatttemperatur in °C und °F, die sich aus gespeicherten Messwerten des Temperatursensors und der verstrichenen Zeit seit Inbetriebnahme der Schaltung errechnet, sowie eine Anzeige auf dem OLED DSP1 über den Ladezustand der Batterien B1 und das Drehen des angezeigten Textes oder der angezeigten Symbole um 180°.

Die Batterien B1 sind über den Batteriedeckel 1 zum Auswechseln zugänglich. Das OLED DSP1 sitzt in Blickrichtung zum Benutzer der Maschine im Betrieb in gut ablesbarem Winkel auf dem Sägeblattschutz 2. Vor dem Batteriedeckel 1 sitzt der Ein-/Ausschalter SW1 bzw. der Taster SW2. Der Temperatursensor U2 sitzt auf der Unterseite der Einheit A und deutet über eine Aussparung im Sägeblattschutz 2 auf die Zahnung 3 des Sägeblattes 4.

Abweichungen und Modifikationen der gezeigten Ausführungsformen sind möglich, ohne den Rahmen der Erfindung zu verlassen.

## Patentansprüche

1. Abschirmvorrichtung (1) zur Abschirmung eines Sägeblatts (3) oder -bands einer Sägemaschine gegen Zugriff durch einen Bediener und gegen Herumschleudern von Werkstückteilen, welche an der Sägemaschine so anbringbar ist, dass sie in einer Arbeitsstellung das Sägeblatt (3) oder -band zum Bediener hin abdeckt, wobei die Abschirmvorrichtung (1) eine Temperaturüberwachungseinheit (2) umfasst, die einen Temperatursensor (4) aufweist, **dadurch gekennzeichnet, dass**
der Temperatursensor (4) berührungslos arbeitet und bei an der Sägemaschine angebrachter und in der Arbeitsstellung befindlicher Abschirmvorrichtung (1) auf die Verzahnung des Sägeblatts (3) oder -bands gerichtet ist, sowie eine Anzeigevorrichtung (5), welche die vom Temperatursensor (4) erfasste Oberflächentemperatur an der Oberfläche der Verzahnung des Sägeblatts (3) anzeigt, wobei
die Temperaturüberwachungseinheit (2) als autark arbeitende Einheit ausgebildet und werkzeuglos von einem Bediener abnehmbar an der Abschirmvorrichtung (1) angebracht ist.

2. Abschirmvorrichtung (1) nach Anspruch 1, **dadurch gekennzeichnet, dass** die Abschirmvorrichtung (1) als oberhalb eines Tischs einer Tischkreissäge anbringbarer Sägeblattschutz (1) ausgebildet ist.

3. Abschirmvorrichtung (1) nach Anspruch 1 oder 2, **dadurch gekennzeichnet, dass** die Temperaturüberwachungseinheit (2) batterie- bzw. akkumulatorbetrieben ist und zur Aufnahme von Batterien (6) bzw. Akkumulatoren ein vorzugsweise über einen abnehmbaren Deckel (8) zugängliches Batterieaufnahmefach umfasst.

4. Abschirmvorrichtung (1) nach Anspruch 1, 2 oder 3, **dadurch gekennzeichnet, dass** die Temperaturüberwachungseinheit (2) einen AN-/-AUS-Schalter aufweist, an dem sie von einem Bediener AN oder AUS schaltbar ist.

5. Abschirmvorrichtung (1) nach einem der vorhergehenden Ansprüche, **dadurch gekennzeichnet, dass** die Temperaturüberwachungseinheit (2) einen Microcontroller aufweist, in dem Steuerroutinen zur Steuerung der Temperaturüberwachungseinheit (2) implementiert sind, so dass bei angeschalteter Temperaturüberwachungseinheit (2) im Ansprechen auf die Ausgabe des Temperatursensors (4) die erfasste Oberflächentemperatur auf der Anzeigevorrichtung (5) angezeigt wird.

6. Abschirmvorrichtung (1) nach einem der vorhergehenden Ansprüche, **dadurch gekennzeichnet, dass** die Anzeigevorrichtung (5) als OLED-Display ausgebildet ist.

7. Abschirmvorrichtung (1) nach einem der vorhergehenden Ansprüche, **dadurch gekennzeichnet, dass** der Temperatursensor (4) als Infrarot-Temperatursensor (4) ausgebildet ist.

8. Abschirmvorrichtung (1) nach einem der vorhergehenden Ansprüche, **dadurch gekennzeichnet, dass** die Temperaturüberwachungseinheit (2) eine Schnittlinienanzeigevorrichtung (9) aufweist, die insbesondere als Laserdiode (9) mit einer refraktiven Optik ausgebildet ist, welche eine in Schnittrichtung weisende Linie auf das Werkstück projeziert.

9. Abschirmvorrichtung (1) nach einem der vorhergehenden Ansprüche, **dadurch gekennzeichnet, dass** die Temperaturüberwachungseinheit (2) an der Abschirmvorrichtung (1) aufgeschoben oder aufgeklipst ist.

10. Abschirmvorrichtung (1) nach einem der vorhergehenden Ansprüche, **dadurch gekennzeichnet, dass** die Temperaturüberwachungseinheit (2) eine in Erfassungsrichtung des Temperatursensors einen im Querschnitt punktförmigen Lichtstrahl abgebende Zielhilfevorrichtung (10) aufweist, zum Anpeilen eines Messpunkts, dessen Oberflächentemperatur mit der abgenommenen Temperaturüberwachungseinheit (2) gemessen werden soll, insbesondere eine als Laserdiode (10) mit einer konvexen Linse ausgebildete Zielhilfevorrichtung (10).

11. Abschirmvorrichtung (1) nach einem der vorhergehenden Ansprüche, **dadurch gekennzeichnet, dass** die Abschirmvorrichtung (1) einen an der Sägemaschine, ortsfest anbringbaren Halterabschnitt und einen daran beweglich, insbesondere verschwenkbar aufgenommenen Schirmträgerabschnitt aufweist, so dass die Abschirmvorrichtung (1) zwischen in einer offenen Stellung, in der das Sägeblatt (3) offen liegt, und der das Sägeblatt (3) verdeckenden Arbeitsstellung beweglich, insbesondere verschwenkbar an der Sägemaschine anbringbar ist.

12. Abschirmvorrichtung (1) nach einem der vorhergehenden Ansprüche, **dadurch gekennzeichnet, dass** der Temperatursensor (4) bei an der Sägemaschine angebrachter und in der Arbeitsstellung befindlicher Abschirmvorrichtung (1) auf die quer zur Schnittrichtung verlaufende, insbesondere umfangsseitige Oberfläche der Verzahnung des Sägeblatts (3) bzw. -bands gerichtet ist.

13. Sägemaschine mit einem Sägeblatt (3) oder -band, an der eine das Sägeblatt (3) bzw. -band abdeckende Abschirmvorrichtung (1) zur Abschirmung des Sägeblatts (3) bzw. -bands gegen Zugriff und Herumschleudern von Werkstückteilen angebracht ist, **dadurch gekennzeichnet, dass** die Abschirmvorrichtung (1) nach einem der vorhergehenden Ansprüche ausgebildet ist.

14. Sägemaschine nach Anspruch 13, **dadurch gekennzeichnet, dass** die Sägemaschine als Tischkreissäge ausgebildet ist, mit einem an einer schlitzförmigen Ausnehmung von einem Sägeblatt (3) durchdrungenen Maschinentisch, an der oberhalb des Sägeblatts (3) eine als Sägeblattschutz (1) nach einem der vorhergehenden Ansprüche 2 bis 12 ausgebildete Abschirmvorrichtung (1) angebracht ist.

## Claims

1. Shielding device (1) for shielding a saw blade (3) or band of a sawing machine against access by an operator and against ejection of workpiece parts, which can be attached to the sawing machine in such a way that, in a working position, it covers the saw blade (3) or band towards the operator, the shielding device (1) comprising a temperature monitoring unit (2) which has a temperature sensor (4), **characterized in that**
the temperature sensor (4) operates without contact and, with the shielding device (1) mounted on the sawing machine and located in the working position, is directed towards the toothing of the saw blade (3) or band, and a display device (5) displays the surface temperature detected by the temperature sensor (4) on the surface of the toothing of the saw blade (3), wherein
the temperature monitoring unit (2) is formed as an autarkic operating unit and is mounted on the shielding device (1) such that it is detachable by an operator without tools.

2. Shielding device (1) according to claim 1, **characterized in that** the shielding device (1) is formed as a saw blade guard (1) mountable above a table of a circular table saw.

3. Shielding device (1) according to claim 1 or 2, **characterized in that** the temperature monitoring unit (2) is battery or accumulator-operated and comprises a battery compartment, which is preferably accessible via a removable cover (8), for accommodating batteries (6) or accumulators.

4. Shielding device (1) according to claim 1, 2 or 3, **characterized in that** the temperature monitoring unit (2) has an ON/OFF switch at which it can be switched ON or OFF by an operator.

5. Shielding device (1) according to one of the preceding claims, **characterized in that** the temperature monitoring unit (2) comprises a microcontroller wherein control routines for controlling the temperature monitoring unit (2) are implemented so that, when the temperature monitoring unit (2) is switched on, the detected surface temperature is displayed on the display device (5) in response to the output of the temperature sensor (4).

6. Shielding device (1) according to one of the preceding claims, **characterized in that** the display device (5) is formed as an OLED display.

7. Shielding device (1) according to one of the preceding claims, **characterized in that** the temperature sensor (4) is formed as an infrared temperature sensor (4).

8. Shielding device (1) according to one of the preceding claims, **characterized in that** the temperature monitoring unit (2) has a cutting line display device (9) which is formed in particular as a laser diode (9) with refractive optics projecting a line pointing in the cutting direction onto the workpiece.

9. Shielding device (1) according to one of the preceding claims, **characterized in that** the temperature monitoring unit (2) is pushed or clipped onto the shielding device (1).

10. Shielding device (1) according to one of the preceding claims, **characterized in that** the temperature monitoring unit (2) comprises a targeting aid device (10) which emits, in the direction of detection of the temperature sensor, a light beam which is point-shaped in cross-section, for targeting a measuring point whose surface temperature is to be measured with the removed temperature monitoring unit (2), in particular a targeting aid device (10) in the form of a laser diode (10) with a convex lens.

11. Shielding device (1) according to one of the preceding claims, **characterized in that** the shielding device (1) has a holder section able to be fixedly attached to the sawing machine and a shield carrier section which is movably accommodated thereon, in particular pivotably, so that the shielding device (1) can be attached to the sawing machine movably, in particular pivotably, between an open position in which the saw blade (3) lies open and the working position covering the saw blade (3).

12. Shielding device (1) according to one of the preceding claims, **characterized in that** the temperature sensor (4) is directed, with the shielding device (1) mounted on the sawing machine and located in the working position, towards that surface of the toothing of the saw blade (3) or band that is running transversely to the cutting direction, in particular on the circumferential side of the saw blade (3).

13. Sawing machine having a saw blade (3) or band to which a shielding device (1) covering the saw blade (3) or band is attached for shielding the saw blade (3) or band against access to and ejection of workpiece parts, **characterized in that** the shielding device (1) is formed according to one of the preceding claims.

14. Sawing machine according to claim 13, **characterised in that** the sawing machine is constructed as a circular table saw with a machine table penetrated by a saw blade (3) at a slot-shaped recess, to which machine table a shielding device (1) formed as saw blade guard (1) according to one of the preceding claims 2 to 12 is attached above the saw blade (3).

## Revendications

1. Dispositif de protection (1) destiné à protéger une lame de scie (3) ou une bande de scie d'une machine à scier contre l'accès par un opérateur et contre la projection de parties de pièces à usiner, qui peut être monté sur la machine à scier de manière à ce qu'il recouvre, dans une position de travail, la lame de scie (3) ou la bande de scie en direction de l'opérateur, dans lequel le dispositif de protection (1) comprend une unité de surveillance de température (2) qui présente un capteur de température (4), **caractérisé par le fait que**
ledit capteur de température (4) fonctionne sans contact et, lorsque le dispositif de protection (1) est monté sur la machine à scier et se trouve en position de travail, est dirigé vers la denture de la lame de scie (3) ou la bande de scie, ainsi qu'un dispositif d'affichage (5) affiche la température de surface sur la surface de la denture de la lame de scie (3), qui est détectée par le capteur de température (4), dans lequel
l'unité de surveillance de température (2) est conçue en tant qu'unité travaillant de façon autarcique et est montée sur le dispositif de protection (1) de manière à pouvoir être détachée sans outil par un opérateur.

2. Dispositif de protection (1) selon la revendication 1, **caractérisé par le fait que** le dispositif de protection (1) est conçu en tant que protection de lame de scie (1) qui peut être montée au-dessus d'une table d'une scie circulaire à table.

3. Dispositif de protection (1) selon la revendication 1 ou 2, **caractérisé par le fait que** l'unité de surveillance de température (2) est actionnée par piles ou bien par accumulateurs et comprend, pour recevoir des piles (6) ou bien des accumulateurs, un compartiment de logement de piles qui est accessible, de préférence, par un couvercle (8) détachable.

4. Dispositif de protection (1) selon la revendication 1, 2 ou 3, **caractérisé par le fait que** l'unité de surveillance de température (2) présente un interrupteur ON/OFF sur lequel elle peut être allumée ou éteinte par un opérateur.

5. Dispositif de protection (1) selon l'une quelconque des revendications précédentes, **caractérisé par le fait que** l'unité de surveillance de température (2) comprend un microcontrôleur dans lequel sont implémentées des routines de commande pour commander l'unité de surveillance de température (2) de sorte que, lorsque l'unité de surveillance de température (2) est allumée, la température de surface détectée est affichée sur le dispositif d'affichage (5) en réponse à la sortie du capteur de température (4).

6. Dispositif de protection (1) selon l'une quelconque des revendications précédentes, **caractérisé par le fait que** le dispositif d'affichage (5) est conçu en tant qu'écran DELO.

7. Dispositif de protection (1) selon l'une quelconque des revendications précédentes, **caractérisé par le fait que** le capteur de température (4) est conçu en tant que capteur de température (4) infrarouge.

8. Dispositif de protection (1) selon l'une quelconque des revendications précédentes, **caractérisé par le fait que** l'unité de surveillance de température (2) comprend un dispositif d'affichage de ligne de coupe (9) qui est conçu en particulier en tant que diode laser (9) ayant une optique réfractive qui projette une ligne sur la pièce à usiner, qui est dirigée dans la direction de coupe.

9. Dispositif de protection (1) selon l'une quelconque des revendications précédentes, **caractérisé par le fait que** l'unité de surveillance de température (2) est montée par coulissement ou clipsée sur le dispositif de protection (1).

10. Dispositif de protection (1) selon l'une quelconque des revendications précédentes, **caractérisé par le fait que** l'unité de surveillance de température (2) présente un dispositif d'aide à la visée (10) qui émet, dans la direction de détection, un faisceau lumineux en forme de point en coupe transversale, afin de viser un point de mesure dont la température de surface doit être mesurée au moyen de l'unité de surveillance de température (2) détachée, en particulier un dispositif d'aide à la visée (10) conçu en tant que diode laser (10) ayant une lentille convexe.

11. Dispositif de protection (1) selon l'une quelconque des revendications précédentes, **caractérisé par le fait que** le dispositif de protection (1) comprend une portion de support apte à être fixée à poste fixe sur la machine à scier, ainsi qu'une portion de support d'écran qui est reçue de manière mobile, en particulier à pivotement, sur celle-ci de sorte que le dispositif de protection (1) peut être monté de façon mobile, en particulier à pivotement, sur la machine à scier, entre une position ouverte dans laquelle la lame de scie (3) est découverte, et la position de travail recouvrant la lame de scie (3).

12. Dispositif de protection (1) selon l'une quelconque des revendications précédentes, **caractérisé par le fait que**, lorsque le dispositif de protection (1) est monté sur la machine à scier et se trouve en position de travail, le capteur de température (4) est dirigé sur la surface, en particulier périphérique, de la denture de la lame de scie (3) ou bien bande de scie, laquelle s'étend transversalement à la direction de coupe.

13. Machine à scier comprenant une lame de scie (3) ou bande de scie, sur laquelle est monté un dispositif de protection (1) recouvrant la lame de scie (3) ou bien bande de scie et destiné à protéger la lame de scie (3) ou bien bande de scie contre l'accès et la projection de parties de pièces à usiner, **caractérisée par le fait que** ledit dispositif de protection (1) est conçu selon l'une quelconque des revendications précédentes.

14. Machine à scier selon la revendication 13, **caractérisée par le fait que** la machine à scier est conçue en tant que scie circulaire à table, comprenant une table de machine pénétrée par une lame de scie (3) sur un évidement en forme de fente, sur laquelle est monté ledit dispositif de protection (1) conçu en tant que protection de lame de scie (1) selon l'une quelconque des revendications 2 à 12, au-dessus de la lame de scie (3).
